# EUROPEAN PATENT SPECIFICATION

(11) **EP 1 092 592 B1**
(45) Date of publication and mention of the grant of the patent: **17.07.2002**
(21) Application number: 99830644.3
(22) Date of filing: 12.10.1999
(51) Int. Cl.: B60R 9/10

(54) **Roof rack bicycle carrier**
Dachfahrradträger
Porte-bicyclette de toit

(43) Date of publication of application: 18.04.2001
(73) Proprietor: Meyster S.p.A., 42025 Cavriago (RE) (IT)
(72) Inventor: Cuseo, Michele, 42200 Reggio Emilia (IT)
(74) Representative: Robba, Pierpaolo

(56) References cited:
- DE-U- 8 813 795
- FR-A- 2 505 751
- FR-A- 2 645 221
- US-A- 3 901 421
- US-A- 4 452 384
- US-A- 4 702 401
- US-A- 4 733 810
- US-A- 4 875 608
- US-A- 5 277 346
- US-A- 5 385 280
- PATENT ABSTRACTS OF JAPAN vol. 1998, no. 09, 31 July 1998 (1998-07-31) & JP 10 109599 A (CAR MATE MFG CO LTD), 28 April 1998 (1998-04-28)

## Description

The present invention relates to an automobile bicycle carrier or rack.

More particularly the invention concerns a bicycle support device adapted to be mounted on an automobile or vehicle, of the type comprising a base frame member, a horizontal upwardly opening channel for receiving the wheels of a bicycle, and a support member or arm, usually pivotally mounted to the base frame member, and adapted for keeping the bicycle in upright position.

Bicycle carriers of this type are known and are usually employed for transporting bicycles on the roof of a motor car. The horizontal opening channel, that is generally secured to transverse bars fitted to the vehicle roof, is formed by a length of folded and painted sheet metal or by an aluminium U-shaped section.

On the other hand, the support member is formed by two hollow tubes having one end pivotally fastened to a transverse member integral with the channel, and the other ends approaching to one another and provided at their junction with a clamp for gripping the slant tube of the bicycle frame. The support member is pivotally joined to the base and can be lowered to a horizontal position when not in use, or raised at a desired angle to adjust - to a certain extent - to bicycles of different sizes.

These devices' are designed for gripping or clamping the front slant tube-of the bicycle frame, i.e. the tube connecting the pedal hub with the handlebar steering head. This support member formed by two convergent tubes is a reasonable trade-off between manufacturing simplicity and side stability. Nevertheless such a support member cannot reach the inner frame for clamping other tubes, such as for example the vertical tube sustaining the seat or the horizontal tube of the frame.

Modern bicycles, particularly the so called mountain bikes and professional racing bicycles, employ special frames, made of aluminium alloys or composite materials, in which the front slant tube is larger than the conventional frame tubes and has a cross section shape that is substantially rectangular or anyhow not circular. It is therefore evident that a multi-purpose"bicycle carrier as illustrated above cannot properly clamp a bicycle of this type. It is therefore necessary to modify the bicycle carriers to fit different models of frames, thus manufacturing and selling several models of bicycle carriers or racks. Such a solution is nevertheless quite expensive both for the manufacturer that must design, build and stock many different models, and for the user that is forced to replace the bicycle support device when changing the model of the bicycle.

DE 88 13 795 U discloses a bicycle carrier according to the preamble of claim 1 with a support member having a head for engaging and keeping in an upright position the bicycle frame, which head is rotatable with respect to the support member about an axis substantially perpendicular to the axis of a horizontal channel intended for receiving the wheels of a bicycle. The head is equipped with a band for securing the bicycle frame to the carrier. The rotatable head and the securing band allow the carrier to clamp frame tubes with different slants and different shapes. Yet mounting the securing band on the rotatable head entails that, when rotating the head, the band could be in a position where it cannot be reached by the user or can be reached only with difficulty.

FR 2 645 221 A, US 5 385 280 A, US 5 277 346 A, US 4 875 608 A, US 4 702 401 A and US 3 901 421 A disclose bicycle carriers for automobiles where the bicycle frame engaging means comprise a pair of jaws.

It is an object of the present invention to provide a multi-purpose bicycle carrier for automobiles which is capable of properly clamping most of the existing bicycle frames and in which the means for securing the bicycle to the carrier are always readily accessible by the user.

This object is accomplished through an automobile bicycle carrier comprising a support member that is provided with a rotatable or steerable jaw assembly, wherein the jaws have frame engaging surfaces generally normal to the rotation axis of the assembly, and the means for securing the bicycle frame to said assembly are arranged to tighten and release the jaws while preventing the rotation thereof and are joined with a spindle forming the rotation axis of said jaw assembly, whereby they remain in a same position relative to the bicycle frame and the support member whatever the angular position of the jaws.

These and other objects are achieved by an automobile bicycle carrier according to the invention, as claimed in the attached claims.

The bicycle carrier for automobiles according to the invention can be advantageously used with almost all the bicycle models since it can grip anyone of the frame tubes.

The above and other objects of the invention will be better understood from the following description of preferred embodiments thereof with reference to the attached drawings in which:
Figure 1 shows a bicycle carrier for automobiles according to the invention with a bicycle secured thereto;
Figure 2 shows a detail of the bicycle carrier of Figure 1; and
Figure 3 shows a detail of another embodiment of a bicycle carrier according to the invention.

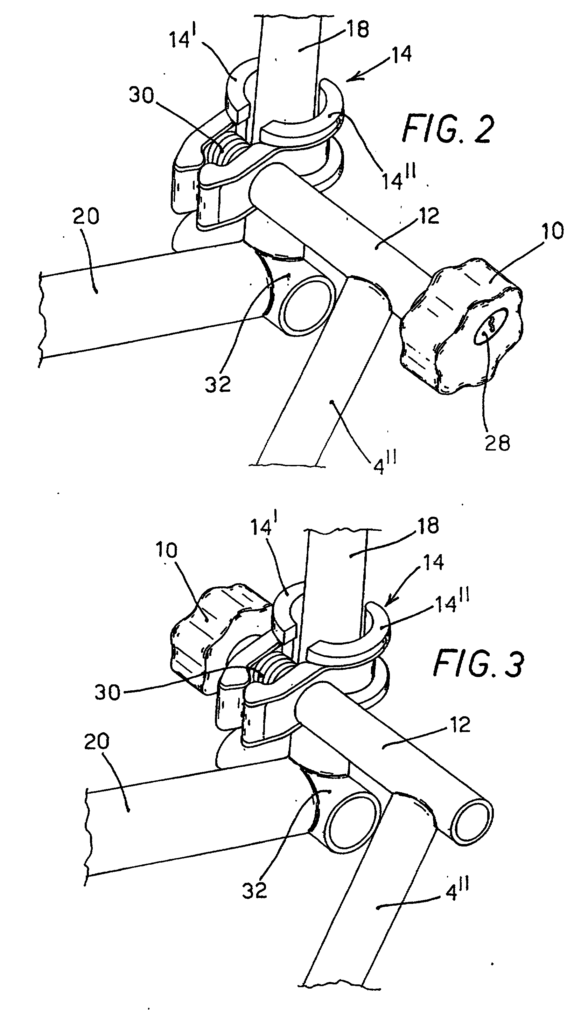

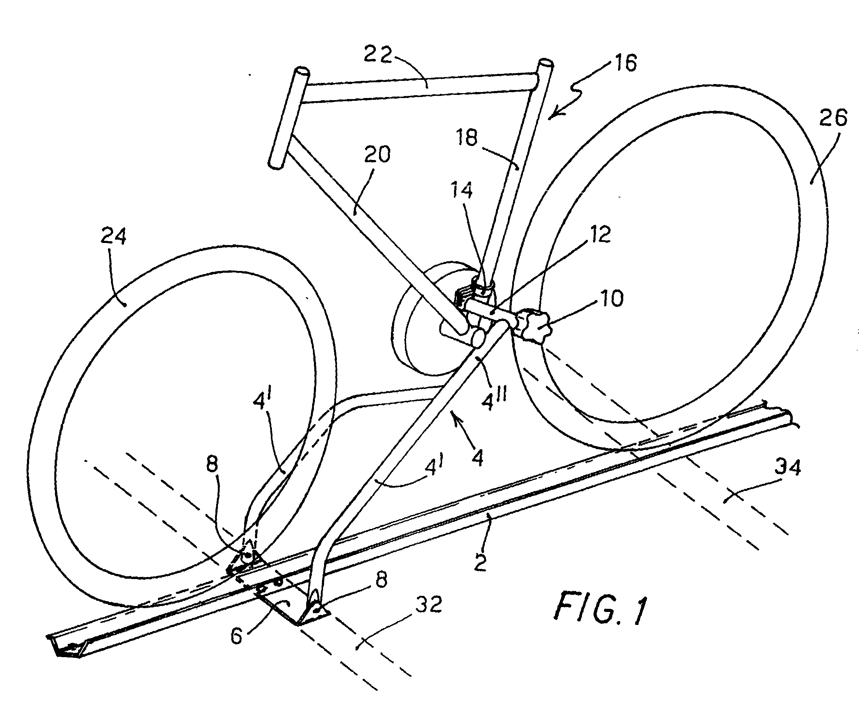

Referring to Figure 1, a bicycle carrier according to the invention comprises a base frame member 32, 34, a horizontal (upwardly opening) channel for receiving the wheels 24, 26 of a bicycle schematically shown in the Figure, and a support member or arm 4, pivotally mounted to the base member at 8 and provided with a jaw assembly 14 such as a couple of jaws, adapted to grip and keep in upright position the frame 16 of the bicycle. The bicycle frame 16 comprises a (substantially) vertical tube 18, a horizontal or top tube 22 and a slant or front down tube 20.

The channel 2 is fastened through known fastening means to two transverse bars 32, 34 forming the base frame member and mounted to the roof of a vehicle. A horizontal plate member 6, integral with the channel 2 and fixed to the transverse bar 32, pivotally mounts (at 8) the support member 4 while at the same time imparting a considerable side stability to the carrier. The wheels 24 and 26 are secured to the channel 2 by means of straps or similar devices of known type that have non been illustrated in the Figures.

The support member or arm 4 comprises a lower portion formed by two tubes 4' and an upper single-tube portion 4" provided at its far end with a system for fastening the bicycle frame, comprising a clamp 14 formed by a couple of co-operating jaws. The free ends of the two tubes 4' forming the lower portion are pivotally joined at 8 to the member 6, and the tubes run parallel to each other for a first length. One of the tubes is bent so as to reach the other tube to which it is welded, while the other tube is substantially straight and forms the single-tube portion 4" after the welding point.

To the other end of the single-tube portion 4" there is welded a short length of tube 12 extending perpendicularly to the portion 4" and carrying at one end the bicycle frame fastening system comprising a couple of jaws 14 and a knob 10 for tightening and releasing the jaws. To the short tube 12 a rotation spindle is fitted having one end connected to the jaws 14, while the other threaded end carries the knob 10.

The jaw assembly 14 is fitted to the rotation spindle so that it can be rotated about an axis that is substantially perpendicular to the axis of the horizontal channel 2. This rotation, together with the swinging movement of the support member 4 that is rotatable about an axis orthogonal to the channel 2, allows the clamp 14 to reach and grip any tube of the bicycle frame so as to adjust the carrier to different models and sizes of the bicycle, such as for example the vertical tube 18, the horizontal tube- 22 or the slant tube 20, with this latter having any inclination and being either straight or curved as it occurs in some bicycles designed for being used by women.

Figure 2 shows with more details the frame fastening system of the bicycle carrier of Figure 1, for clamping the (substantially) vertical tube 18 of a bicycle frame.

A helical spring 30, coaxial to the rotation spindle and inserted between the two jaws 14' and 14" forming the jaw assembly, keeps the jaws in proper spaced apart relationship when the knob 10 is turned, while at the same time preventing or limiting their rotation. The rotation of the jaw assembly can be further hindered by providing - on the coupling surfaces between the tube 12 and the adjacent jaw 14"- co-operating projections radially located with respect to the central rotation spindle. It is thus possible to obtain an evenly frictional rotation motion of the jaw assembly, or a stepwise rotation motion thereof.

The knob 10 is provided for releasing and tightening the jaws 14' and 14" and when it is turned clockwise tightens the tube 18 while preventing the rotation of the jaws. This way the bicycle is secured to the bicycle carrier only through the rotation of the knob.

The jaws 14' and 14" are of metal and their inner parts contacting the frame tube are provided with a rubber or plastic covering to prevent the tube from being scratched or otherwise damaging the paint or even the gripped tube.

In the embodiment shown in Figure 2, the jaws clamp the base of the vertical tube 18 connecting the seat or saddle with the pedal hub, near the hub 32. This location is particularly comfortable and advantageous since a vertical tube 18 is present in most frame designs, both in models, for men and women, and moreover a lower clamping position makes easier the loading on and the unloading from the roof of the vehicle.

In a similar way, after a proper rotation the couple of jaws 14 can be steered so as to grip the slant tube 20, or the horizontal upper tube 22, according to the bicycle model or size.

The knob 10 can be equipped with a deadlock 28 that prevents an undesired operation of the clamp after the key has been removed.

Figure 3 shows a detail of another embodiment of a bicycle carrier according to the invention. More particularly in this embodiment the knob 10 is positioned on the same side of the jaws 14, thus making easier the knob turning from the opposed side of the vehicle. In fact, when two or more carriers are to be mounted on the roof of a same vehicle, it can be of advantage to provide for a "right side" carrier to be mounted on a side of the roof, and a "left side" carrier to be mounted on the opposite side of the roof. From the technical point of view the clamping system shown in Figure 3 provides for the same components as the clamp system shown in Figure 2. The knob 10 is fitted to a threaded end of the rotation spindle which at the opposed end is secured inside the tube 12.

A clamp system as disclosed above and shown in Figure 2 or in Figure 3, can also be used together with a single-tube support member, i.e. a member formed by a single L-shaped tube having a short arm pivotally joined to the horizontal channel 2. However this embodiment requires tubes of larger diameters and a stronger horizontal plate member 6 to ensure an equivalent structural strength.

## Claims

1. A bicycle carrier for automobiles comprising: a base frame member (32, 34), a horizontal upwardly opening channel (2) for receiving the wheels (24, 26) of a bicycle; a support member (4) pivotally connected at one end to said base member and provided at the other end with an assembly (14) for gripping and keeping in an upright position the bicycle frame (16), said assembly (14) being rotatable with respect to said support member (4) about an axis substantially perpendicular to the axis of said horizontal channel (2); and means (10) for securing the bicycle frame to said assembly (14); **characterised in that** said bicycle frame gripping assembly (14) comprises a couple of jaws (14', 14") having frame engaging surfaces generally normal to the rotation axis of the assembly (14) and the means (10) for securing the bicycle frame to said assembly (14) are means for tightening and releasing the jaws (14', 14") while preventing the rotation thereof and are carried by a spindle forming the rotation axis of said jaw assembly (14), whereby said securing means (10) remain in a same position relative to the bicycle frame and the support member whatever the angular position of the jaws (14', 14").

2. A bicycle carrier as claimed in claim 1, **characterised in that** it comprises a helical spring (30) coaxial to said rotation spindle and located between the jaws (14', 14") of said jaw assembly (14) for keeping said jaws in proper spaced apart relationship when said securing means (10) are actuated, while at the same time limiting the jaw rotation.

3. A bicycle carrier as claimed in claim 1, **characterised in that** the rotation of said jaws (14', 14") is further limited by the presence of projections on the coupling surfaces between a short tube (12) housing said spindle and secured to said other end of said support member (4) perpendicularly to the axis of the support member, and the adjacent jaw, said projections being radially located with respect to the central rotation spindle.

4. A bicycle carrier as claimed in claim 3, **characterised in that** said projections, together with the action of said helical spring (30), allow for a stepwise rotation of said jaws (14', 14") about said rotation spindle.

5. A bicycle carrier as claimed in any preceding claim, **characterised in that** said securing means (10) are mounted at the opposite end of said short tube (12) with respect to said couple of jaws (14', 14").

6. A bicycle carrier as claimed in any of claims 1 to 4, **characterised in that** said couple of jaws (14', 14") is located between said short tube (12) and said securing means (10).

7. A bicycle carrier as claimed in claim 1, **characterised in that** said support member (4) comprises a lower portion (4') that is formed by two tubes and is pivotally connected to said channel (2) through a horizontal plate member (6), and an upper single-tube portion (4") the free end of which carries said couple of jaws (14', 14").

8. A bicycle carrier as claimed in any preceding claim, **characterised in that** said jaws (14', 14") can clamp the vertical tube (18) of said bicycle frame (16) connecting the seat with the pedal hub.

9. A bicycle carrier as claimed in claim 8, wherein said jaws (14', 14") can clamp the bicycle frame (16) at the lower end of said vertical tube (18), near the pedal hub (32).

10. A bicycle carrier as claimed in any of claims 1 to 7, wherein said jaws (14', 14") can clamp either the tube (20) of the bicycle frame (16) connecting the handlebar steering head with the pedal hub, or the tube (22) connecting the handlebar steering head with the seat tube.

## Patentansprüche

1. Fahrradträger für Kraftfahrzeuge, umfassend: ein Fußgestellelement (32, 34), eine horizontale, sich nach oben zu öffnende Rinne (2) zur Aufnahme der Räder (24, 26) eines Fahrrads, ein Stützelement (4), das an einem Ende schwenkbar mit dem Fußelement verbunden ist und am anderen Ende mit einer Anordnung (14) versehen ist, um den Fahrradrahmen (16) zu erfassen und in einer aufrechten Lage zu halten, wobei die Anordnung (14) in Bezug zum Stützelement (4) um eine zur Achse der horizontalen Rinne (2) im Wesentlichen senkrechte Achse drehbar ist, sowie Einrichtungen (10) zum Befestigen des Fahrradrahmens an der Anordnung (14), **dadurch gekennzeichnet, dass** die Anordnung (14) zum Erfassen des Fahrradrahmens ein Paar Backen (14', 14") mit zur Drehachse der Anordnung (14) allgemein senkrechten Rahmeneingriffsflächen umfasst, und die Einrichtungen (10) zum Befestigen des Fahrradrahmens an der Anordnung (14) Einrichtungen sind, um die Backen (14', 14") festzuziehen und zu lösen, während eine Drehung derselben verhindert wird, und von einer die Drehachse der Backenanordnung (14) bildenden Spindel getragen werden, wodurch die Befestigungseinrichtungen (10) ungeachtet der Winkellage der Backen (14', 14") in Bezug zum Fahrradrahmen und zum Stützelement in einer selben Lage verbleiben.

2. Fahrradträger nach Anspruch 1, **dadurch gekennzeichnet, dass** er eine zur Drehspindel koaxiale und zwischen den Backen (14', 14") der Backenanordnung (14) angeordnete Schraubenfeder (30) umfasst, um die Backen in einer angemessenen Abstandsbeziehung zu halten, wenn die Befestigungseinrichtungen (10) betätigt werden, während gleichzeitig die Backendrehung begrenzt wird.

3. Fahrradträger nach Anspruch 1, **dadurch gekennzeichnet, dass** die Drehung der Backen (14', 14") weiter durch das Vorhandensein von Vorsprüngen auf den Kupplungsflächen zwischen einem die Spindel beherbergenden und am anderen Ende des Stützelements (4) senkrecht zur Achse des Stützelements befestigten kurzen Rohr (12) und der benachbarten Backe verhindert wird, wobei die Vorsprünge in Bezug zur mittigen Drehspindel radial angeordnet sind.

4. Fahrradträger nach Anspruch 3, **dadurch gekennzeichnet, dass** die Vorsprünge, zusammen mit der Wirkung der Schraubenfeder (30), eine schrittweise Drehung der Backen (14', 14'') um die Drehspindel gestatten.

5. Fahrradträger nach einem vorangehenden Anspruch, **dadurch gekennzeichnet, dass** die Befestigungseinrichtungen (10) in Bezug zu dem Paar Backen (14', 14") am entgegengesetzten Ende des kurzen Rohrs (12) angebracht sind.

6. Fahrradträger nach einem der Ansprüche 1 bis 4, **dadurch gekennzeichnet, dass** das Paar Backen (14', 14") zwischen dem kurzen Rohr (12) und den Befestigungseinrichtungen (10) angeordnet ist.

7. Fahrradträger nach Anspruch 1, **dadurch gekennzeichnet, dass** das Stützelement (4) einen unteren Teil (4'), der von zwei Rohren gebildet wird und durch ein horizontales Plattenelement (6) schwenkbar mit der Rinne (2) verbunden ist, und einen oberen Einzelrohrteil (4") umfasst, dessen freies Ende das Paar Backen (14', 14") trägt.

8. Fahrradträger nach einem vorangehenden Anspruch, **dadurch gekennzeichnet, dass** die Backen (14', 14'') das den Sitz mit der Pedalnabe verbindende vertikale Rohr (18) des Fahrradrahmens (16) einspannen können.

9. Fahrradträger nach Anspruch 8, bei dem die Backen (14', 14") den Fahrradrahmen (16) am unteren Ende des vertikalen Rohrs (18), nahe der Pedalnabe (32), einspannen können.

10. Fahrradträger nach einem der Ansprüche 1 bis 7, bei dem die Backen (14', 14") entweder das den Lenkergabelkopf mit der Pedalnabe verbindende Rohr (20) des Fahrradrahmens (16) oder das den Lenkergabelkopf mit dem Sitzrohr verbindende Rohr (22) einspannen können.

## Revendications

1. Porte-bicyclette pour automobiles comprenant : un membre de support de base (32, 34), une rigole (2) horizontale ouverte vers le haut pour recevoir les roues (24, 26) d'une bicyclette ; un membre de support (4) connecté de manière pivotable à une extrémité dudit membre de base et muni à l'autre extrémité d'un assemblage (14) pour fixer et maintenir dans une position verticale le cadre (16) de la bicyclette, ledit assemblage (14) étant rotatif par rapport audit membre de support (4) autour d'un axe sensiblement perpendiculaire à l'axe de ladite rigole horizontale (2) ; et un moyen (10) pour fixer le cadre de bicyclette audit assemblage (14) ; **caractérisé en ce que** ledit assemblage (14) de fixation de cadre de bicyclette comprend une paire de mâchoires (14', 14") présentant des surfaces pour engager le cadre, généralement perpendiculaires à l'axe de rotation de l'assemblage (14) et le moyen (10) pour fixer le cadre de bicyclette audit assemblage (14) est un moyen pour serrer et desserrer les mâchoires (14', 14") en évitant la rotation de celles-ci et est maintenu par une tige qui forme l'axe de rotation dudit assemblage (14) de mâchoires, dans lequel ledit moyen de fixation (10) reste dans la même position par rapport au cadre de bicyclette et par rapport au support quelque soit la position angulaire des mâchoires (14', 14").

2. Porte-bicyclette selon la revendication 1, **caractérisé en ce qu'**il comprend un ressort hélicoïdal (30) coaxial à ladite tige de rotation qui se situe entre les mâchoires (14', 14") dudit assemblage (14) de mâchoires pour maintenir lesdites mâchoires dans une relation d'écartement spatial adéquat.

3. Porte-bicyclette selon la revendication 1, **caractérisé en ce que** la rotation desdites mâchoires (14', 14") est en outre limitée par la présence de rebords sur les surfaces couplées entre un tube court (12), logeant ladite tige, fixé à l'autre extrémité dudit membre de support (4) perpendiculairement à l'axe du membre de support, et la mâchoire adjacente, lesdits rebords étant situés radialement par rapport à la tige de rotation centrale.

4. Porte-bicyclette selon la revendication 3, **caractérisé en ce que** lesdits rebords, avec l'action dudit ressort hélicoïdal (30), permettent une rotation par étapes desdites mâchoires (14', 14") autour de ladite tige de rotation.

5. Porte-bicyclette selon l'une quelconque des revendications précédentes, **caractérisé en ce que** lesdits moyens de fixation (10) sont assemblés à l'extrémité opposée dudit tube court (12) par rapport à ladite paire de mâchoires (14', 14").

6. Porte-bicyclette selon l'une quelconque des revendications 1 à 4, **caractérisé en ce que** la paire de mâchoires (14', 14") est située entre ledit tube court (12) et ledit moyen de fixation (10).

7. Porte-bicyclette selon la revendication 1, **caractérisé en ce que** ledit membre de support (4) comprend une partie inférieure (4') qui est formée par deux tubes et est connecté de manière pivotable à ladite rigole (2) par un membre plat horizontal (6), et par une partie supérieure (4") de tube simple, l'extrémité libre de celle-ci porte ledit couple de mâchoires (14', 14").

8. Porte-bicyclette selon l'une quelconque des revendications précédentes, **caractérisé en ce que** lesdites mâchoires (14', 14") peuvent fixer ledit tube (18) dudit cadre (16) de bicyclette connectant la selle avec le moyeu de la pédale.

9. Porte-bicyclette selon la revendication 8, **caractérisé en ce que** lesdites mâchoires (14', 14") peuvent fixer le cadre (16) de bicyclette sur l'extrémité inférieure dudit tube vertical (18), près du moyeu de la pédale (32).

10. Porte-bicyclette selon l'une quelconque des revendications 1 à 7, **caractérisé en ce que** lesdites mâchoires (14', 14") peuvent fixer aussi bien le tube (20) du cadre (16) de bicyclette connectant la fourche du guidon avec le moyeu de la pédale, ainsi que le tube (22) connectant la fourche du guidon avec le tube de la selle.
